Europäisches Patentamt

European Patent Office

Office européen des brevets

(11) Publication number : **0 480 695 A1**

# EUROPEAN PATENT APPLICATION

(21) Application number : **91309256.5**

(22) Date of filing : **09.10.91**

(51) Int. Cl.⁵ : **A01B 17/00, A01B 49/02**

(30) Priority : **12.10.90 GB 9022241**

(43) Date of publication of application :
**15.04.92 Bulletin 92/16**

(84) Designated Contracting States :
**DE DK ES FR IT NL**

(71) Applicant : **OPICO LTD**
**South Road**
**Bourne, Lincs PE10 9LG (GB)**

(72) Inventor : **Hall, Ian Keith**
**35 Welland Way**
**Oakham, Rutland LE15 6SL (GB)**

(74) Representative : **Archer, Philip Bruce et al**
**Urquhart-Dykes & Lord European Patent**
**Attorneys New Priestgate House 57 Priestgate**
**Peterborough Cambridgeshire PE1 1JX (GB)**

(54) **Two-Way Ploughs.**

(57) A two-way plough (12) in which the plough beam (14) pivots about an upwardly extending axis (26) has connection means (34) for releasably connecting a furrow press (36) alternately on opposite sides of the plough (12) during two-way operations. Pivotal movement of the plough beam (14) about its axis is transmitted to a pair of pivotally mounted connection arms (38,40) which swing in and out between extended and retracted positions for connection to and disconnection from the furrow press (36). The connection arms (38,40) move automatically on movement of the plough beam (14).

FIG.4

Jouve, 18, rue Saint-Denis, 75001 PARIS

This invention relates to two-way ploughs. More specifically, the invention relates to a method and apparatus for connecting an implement such as a furrow press to a two-way plough so that the furrow press is pulled alongside the plough alternately on opposite sides of the plough in successive passes during two-way operation.

An example of the application of the invention is to the OPICO (registered trade mark) SQUARE PLOW (registered trade mark) brand two-way plough. The invention may also be applied to other two-way ploughs having related operating characteristics, for example two-way disc ploughs. The invention in its broadest aspect is applicable to any two-way plough in which the plough beam is swingable between its two operating positions by pivotal movement about a generally upwardly extending axis, as opposed to a generally horizontally extending axis.

In the case of a two-way plough having a plough beam which is swingable between working positions about a pivot axis extending generally upwardly, the problem arises that in order to use a furrow press or similar consolidation implement in tandem along side the plough, there is needed a towing arm alternately on opposite sides of the implement for connection to the furrow press on successive passes of the plough in a given field.

In the case of a two-way plough of the conventional kind in which the plough bodies turn about a generally horizontally extending fore/aft axis between their two working positions, the towing arm for a furrow press or the like is mounted at a fixed position on the turnable plough assembly so that the arm moves between operating positions at opposite sides of the assembly, as required for successive passes in a field. Moreover, by the use of just a single towing arm, the advantage is obtained that when the arm is in its working position on one side of the implement, the other side of the implement is entirely free and unobstructed by the arm, and hence the possibility of the arm striking an obstacle such as a tree or electricity pylon, telegraph pole, hedge or the like just does not arise. Such a collision is of course a distinct possibility where the straightforward, simple, uncomplicated and robust solution is adopted of providing a projecting towing arm in a fixed position at both sides of the plough is adopted. However, the safety consequences of such an arrangement are so significant that it is out of the question for many farming operations.

Accordingly, some means is needed to enable a towing arm to be provided alternately at opposite sides of the plough on successive passes in a field, but with the proviso, of course, that the arm is adequately retracted at one side while adequately extended at the other, and when in its extended position, is capable of handling the very substantial draft loads imposed by the furrow press or related consolidation implements.

This latter requirement leads to certain difficulties which are a direct result of the particular geometry of a plough in which the plough beam pivots about a generally upwardly extending axis between its two operating positions. Thus, whereas a conventional two-way plough turns through 180 degrees between successive passes, and this angular movement corresponds exactly with that required for the movement of its towing arm between the latter's two operating positions, the plough beam in a plough of the kind with which the present invention is concerned typically moves only about 35 to 45 degrees on either side of the fore/aft axis, and thus the total angular movement is about 70 to 90 degrees, and accordingly it is difficult to see how the plough beam movement can be used in a way similar to that adopted in a horizontal axis two-way plough to achieve the necessary change-over in towing arm position.

An object of the present invention is to provide for a two-way plough of the kind in which the plough beam pivots between operating positions about a generally upwardly extending axis, connection or towing means for, for example, a consolidation implement such as a furrow press, at the relevant side of the implement during successive passes of the implement in a field, the arrangement being such that the disadvantages of having a fixed towing arm at both sides of the implement are avoided and/or one or more other improvements or advantages are provided as disclosed herein, or improvements generally.

According to the invention there is provided, for a two-way plough, connection means and a method of operating same as claimed in the accompanying claims. In said method, the plough beam is caused to effect movement of the connection arms of the connection means between their retracted and extended positions by transmitting motion thereto. The invention specifically provides a kit of parts for mounting on a two-way plough, to adapt it for towing an implement.

In a preferred embodiment, a two-way plough is provided with movably mounted towing arms for a furrow press or the like consolidation implement, at opposite sides of the implement. The towing arms are movable between extended towing positions and retracted positions. Connection means is provided between the plough beam and the towing arms whereby lateral swinging movement of the plough between its two operating positions causes change-over in the towing arms, one arm being retracted and one being extended. In the preferred embodiment, lost motion is provided (or a mechanical or hydraulic equivalent) in the connection means, whereby the extent of movement of the plough beam is caused to produce exactly the required degree of movement of the towing arms for movement between their extended and retracted positions.

In one embodiment there is provided lost motion in the connection between the plough beam and the towing arms in the form of a pin and slot mechanism in a connecting linkage. In another embodiment, the lost motion is provided by arranging for the plough beam, or a structure mounted thereon to engage the towing arms, or their operating mechanism, only after the plough beam has executed a certain degree of movement from its one working position towards the other, thereby effectively taking up the lost-motion. In a related hydraulic counterpart, the "lost motion" is achieved hydraulically by arranging that the dimensions (stroke bore etc) of interconnected master and slave cylinders are appropriate for achieving the required degree of movement of the towing arms for the given (usually larger) movement of the plough beam. In other embodiments, a similar effect can be achieved by use of suitable mechanical linkages, for example a generally W-shaped lever linkage.

By providing motion transmitting means to transmit motion from the plough beam to the connection arms to effect movement of the arms between their retracted and extended positions, an extremely simple system is provided for automatic operation of the connection arms using motion from the ram or rams or mechanical system which pivot the plough beam, to also control the connection arms.

By virtue of the lost motion provided in the linkage connecting the plough beam to the connection arms, or indeed by arranging the geometry of the linkage or simply positioning the connection arms for abutment with the plough beam when it reaches a suitable position, the difference in travel as between the plough beam and the connection arms themselves is compensated-for. Moreover, by suitably arranging the linkage, in its connection to the connection arms, the linkage can be arranged to stabilise same in their extended working positions. Additionally, shock absorbing means, such as rubber end stops can be provided to cushion shock loadings in use.

Embodiments of the invention will now be described by way of example with reference to the accompanying drawings in which :-

Fig 1 shows a perspective view of a tractor and plough combination, to illustrate the general relative disposition of the tractor and the plough, the connection system of the invention being omitted for reasons of simplicity;

Figs 2 and 3 show plan views of the plough of Fig 1 in its two-way positions, with the plough beam pivoted in opposite directions;

Fig 4 shows, on a larger scale, a plan view corresponding to that of Fig 3 of a portion of the plough of Fig 3 with the associated furrow press connected to the connection arm thereof; and

Fig 5 shows a front elevation view of the plough, the direction of viewing being indicated by arrow V in Fig 4.

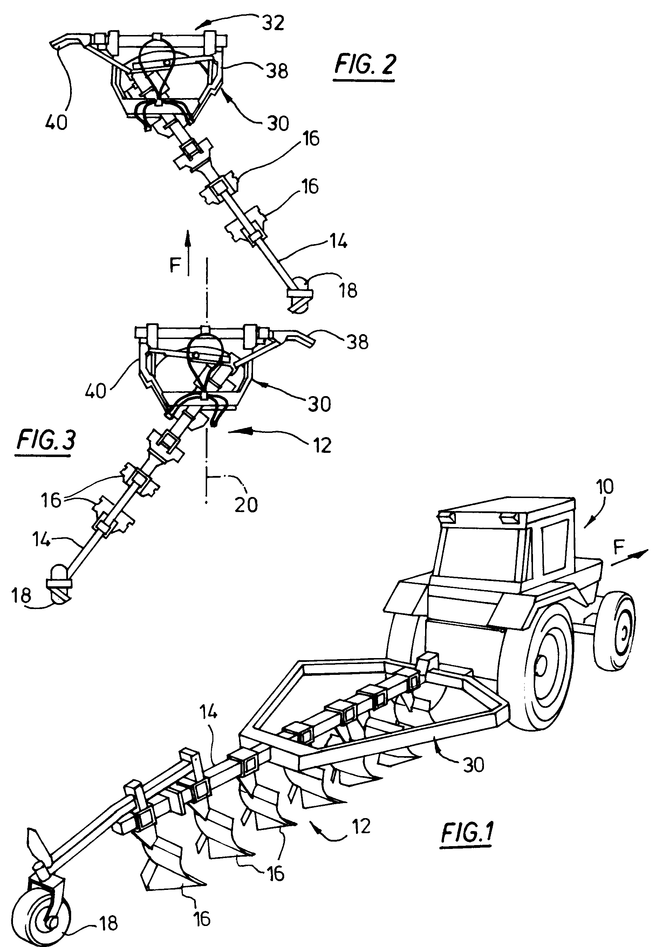

As shown in Figs 1, 2 and 3 of the drawings, a tractor 10 has fully mounted thereon a plough 12 comprising a plough beam 14, plough bottoms or mouldboards 16 and a castored tail wheel 18.

In Fig 1 there is shown by arrow F the direction of normal forward movement of the plough/tractor assembly in use. In addition, there is shown in Fig 3 the axis 20 related to direction F, namely the fore/aft axis of the plough. Figs 2 and 3 show the alternate operating positions of the plough beam 14 in its two operating positions for ploughing in opposite directions in successive passes in a field. It will be noted that the number of plough bottoms provided on plough 12 differs as between Figs 2 and 3, on the one hand, and Fig 1 on the other. This is purely incidental to the method and apparatus of the invention and illustrates alternative sizes of plough. The position of the plough beam 14 shown in Fig 1 is approximately in line with axis 20, as adopted for transport purposes.

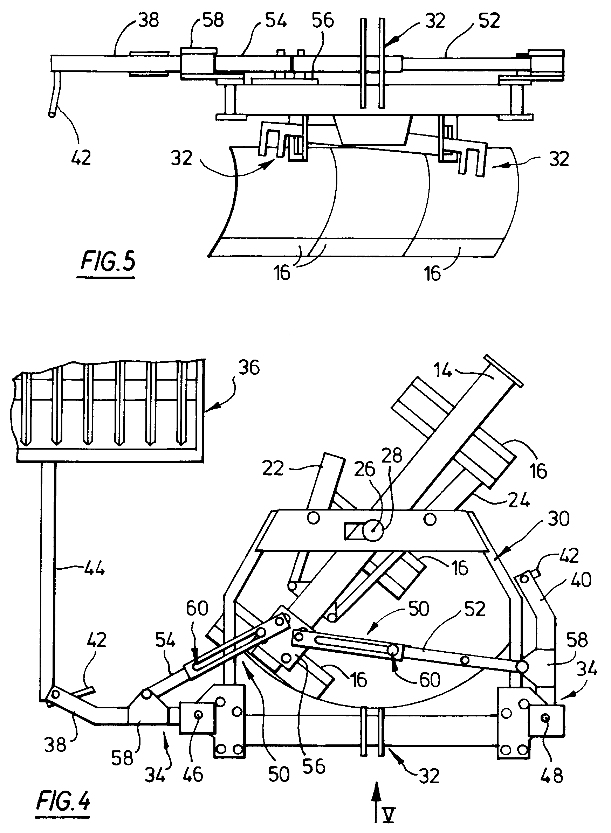

Plough beam 14 is swung between its Fig 2 and Fig 3 positions by means of hydraulic rams 22, 24, best seen in Fig 4. The plough beam pivots about an upwardly extending axis 26 defined by a pivot assembly 28 provided on an open framework 30 having a head stok 32 connected to the three-point hitch linkage of the tractor.

As shown in Fig 4, plough 12 is provided with connection means 34 whereby it can be releasably connected to an implement such as a furrow press 36 or other consolidation implement, which is to be trailed alongside the plough.

Connection means 34 comprises connection arms 38, 40 which each have a depending towing member 42 for engagement with complementary hook means (not shown) at the forward end of the drawbar 44 of furrow press 36. A second drawbar (not shown) is at 90 degrees to drawbar 44 for pick-up on changing direction at a headland. The second drawbar then swings into line with direction F.

The connection arms 38, 40 are mounted one at each side of open framework 30 for pivotal movement about respective upwardly inclined axes 46, 48 between the extended position shown for arm 38 in Fig 4, and the retracted position shown for arm 40 therein. In the retracted position of each arm it lies fully within the external confines of the implement, thereby avoiding the danger of collision with fixtures such as pylons and telegraph poles.

In order to ensure that when the plough beam 14 moves between its two operating positions shown in Figs 2 and 3, the connection arms 38, 40 correspondingly change over so that furrow press 36 can be picked up after the implement has turned round at the headland, and trailed onwards at the other side of the plough, there is provided motion transmitting means 50 to transmit motion from the forward end of beam 14 to the connection arms 38, 40.

In this embodiment, the motion transmitting means comprises a link 52, 54 pivotally connecting a mounting plate 56 on beam 14, and a bracket 58 on each of the arms 38, 40. Lost motion is provided in each of the link 52, 54 by means of a pin and slot assembly 60 interconnecting the telescopy halves of each link.

As shown on the left hand side on Fig 4, link 54 acts, in the working position of connection arm 38 to support and stabilise same under the action of the very considerable loads applied to the arm by the plough in order to tow the heavy furrow press 36. It will be understood that link 54 is under compression during use, thereby resisting the tendency for connection arm 38 to pivot inwardly. In order to cushion shock loadings, shock absorbing means is provided in the telescopic links 52, 54 in the form of rubber buffers which are engaged in the compressed condition of the telescopic links.

At the end of a row the fully mounted plough is raised, thereby disengaging towing member 42 from the drawbar 44 of the furrow press. Rams 22 and 24 are then caused to extend and retract respectively (from the Fig 4 position) in order to swing plough beam 14 anti clockwise about axis 26 to its Fig 2 position. As this occurs, the lost motion in link 54 allows the plough beam initially to move without drawing arm 38 in, then when the lost motion has all been taken up, the arm is pulled inwards to its retracted position. Simultaneously, the lost motion in link 52 is initially taken up, and then arm 40 is moved outwards to its extended position in order to re-connect to the drawbar assembly of furrow press 36 for the next pass in the field.

Interestingly, in the above embodiment there has been provided a simple means whereby the swinging of the plough beam between its two operating positions automatically changes over the connection arms for the furrow press between their alternate positions, without the need for any additional action on the part of the tractor driver. Moreover, the connection arms when not in use are kept within the confines of the plough, thereby avoiding collision dangers so that a two-way plough having the less conventional upwardly extending beam pivot axis can operate with a furrow press or other implement just as effectively as a conventional roll-over two-way plough with a horizontal beam pivot axis.

In a further embodiment, the links 52 and 54 are replaced by hydraulic rams connected in series with the beam-pivot rams 22 and 24 so as to operate in slave/master relationship thereto. The link-replacing rams are dimensioned so as to produce the required travel of the connection arms 38 and 40 upon plough beam pivoting.

In a further embodiment, also not illustrated, the linkage of motion transmitting means 50 is modified by the use of two or more pivotally interconnected links at each side of the forward end of the plough beam, the geometry of these links being so chosen that the travel of the beam is correspondingly adjusted in relation to the angular movement of the connection arms 38 and 40 so as to produce the required movement, as shown in Fig 4. In this embodiment, the so-called "lost motion" is accommodated by the geometry of the linkage.

In a still further embodiment, likewise not illustrated, there is provided, in place of the lost motion accommodated by the pin and slot assembly shown in Fig 4, a simple abutment arrangement whereby the forward end of the plough beam engages abutment means on the connection arms at each end of its travel, thereby causing, at any given time, one of the arms to be extended to its working position. When the beam moves across to its other position, the previously extended connection arm can move inwards under the actio of, for example, any suitable return means such as a torsion or tension spring.

## Claims

1. Connection means for use in a two-way plough of the kind comprising a plough beam mounted for pivotal movement between two operating positions corresponding to said two-way operation, the connection means comprising :-
   a) means for mounting the connection means at the forward end of the plough, with respect to its direction of working operation, for releasably connecting the plough to an implement to be pulled alongside the plough;
   b) said connection means being mountable for movement between operating positions at opposite sides of the fore/aft axis of the plough when said plough beam moves between its two operating positions;
   characterised by
   c) said plough being of the kind in which said plough beam is pivotal between its operating positions about an axis extending generally upwardly in use;
   d) said connection means comprising a pair of connection arms to be mounted one at each side of said fore/aft axis of the plough and each arm being movably mounted for movement between an extended working position and a retracted position; and
   e) said connection means further comprising motion transmitting means to transmit motion from said beam to said connection arms to effect movement of said arms between their retracted and extended positions.

2. Connection means for use in a two-way plough having a plough beam pivotable about an upwardly extending axis, the connection means being mountable at the forward end of the plough for releasably connecting same to an implement to be pulled alongside same, characterised by motion transmitting means to transmit motion from the plough beam to a pair of arms of said connection means to effect movement of said arms between retracted and extended positions.

3. Connection means according to claim 1 or claim 2 characterised by said motion transmitting means comprising a linkage connecting said connection means and said plough beam.

4. Connection means according to claim 3 characterised by said linkage providing lost motion, as between said plough beam and said connection arms, in said linkage.

5. Connection means according to claim 4 characterised by said lost motion being provided by a slot formed in said linkage.

6. Connection means according to claim 4 characterised by said lost motion being provided by means of at least two pivoted links suitably mounted so as to provide said lost motion by virtue of their geometry.

7. Connection means according to any one of claims 3 to 6 characterised by said linkage comprising disconnectible pin means to enable said connection arms to be both held in their retracted positions for transport.

8. Connection means according to any one of claims 3 to 7 characterised by said linkage being adapted to stabilise said connection arms in their extended positions by virtue of a link connected to the connection arms and serving to transmit loads in use.

9. Connection means according to any one of claims 3 to 8 characterised by said linkage having shock absorbing means to cushion shock loadings applied thereto in use.

10. A connection means according to claim 1 or claim 2 characterised by said motion transmitting means comprising a ram.

11. Connection means according to claim 10 characterised by said ram being hydraulically connected to a ram provided for moving said plough beam between the operating positions of the beam.

12. Connection means according to claim 1 or claim 2 characterised by said motion transmitting means comprising abutment means located for engagement with said beam as the beam moves between its operating positions.

13. Connection means according to claim 12 characterised by shock absorbing means associated with said abutment means, for example an elastic buffer for engagement with said plough beam.

FIG. 2

FIG.3

FIG.1

FIG.5

FIG.4

EP 0 480 695 A1

European Patent Office

**EUROPEAN SEARCH REPORT**

Application Number

EP 91 30 9256

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 800 963 (GOMEZ)<br>* abstract; figure 1 *<br>--- | 1,2 | A01B17/00<br>A01B49/02 |
| A | DE-C-958 964 (PFLUGFABRIK LEMKEN)<br>* page 2, line 33 - line 36; figures 1,2 *<br>--- | 1,2 | |
| A | DE-A-3 905 387 (LÜHRS)<br>* abstract; figure 1 *<br>--- | 1,2 | |
| A | DE-U-8 911 923 (NIEMEYER SÖHNE GMBH)<br>----- | | |
| | | | **TECHNICAL FIELDS SEARCHED (Int. Cl.5 )** |
| | | | A01B |

The present search report has been drawn up for all claims

| Place of search | Date of completion of the search | Examiner |
|---|---|---|
| THE HAGUE | 29 NOVEMBER 1991 | ECCETTO M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8